# EUROPÄISCHE PATENTSCHRIFT

(11) **EP 0 392 385 B1**
(45) Veröffentlichungstag und Bekanntmachung des Hinweises auf die Patenterteilung: **07.09.1994**
(21) Anmeldenummer: 90106633.2
(22) Anmeldetag: 06.04.1990
(51) Int. Cl.: G03B 5/04

(54) **Vorrichtung zur Korrektur von perspektivischen Verzerrungen**
Apparatus for the correction of distortions in perspective
Appareil pour la correction de distortions de perspective

(30) Priorität: 14.04.1989 DE 3912235
(43) Veröffentlichungstag der Anmeldung: 17.10.1990
(60) Teilanmeldung: 91100477.8
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Flöther, Werner, D-7080 Aalen (DE)

(56) Entgegenhaltungen:
- DE-A- 2 613 159
- DE-A- 2 855 496
- DE-A- 3 436 886
- DE-U- 8 608 623
- US-A- 3 713 725

## Beschreibung

Die Erfindung betrifft ein Verfahren nach dem Oberbegriff des Anspruchs 1, sowie eine Vorrichtung nach dem Oberbegriff des Anspruchs 2.

Vorrichtungen der obengenannten Art werden PC-Objektive oder Shift-Objektive genannt, wenn das abbildende optische System als Objektiv ausgebildet ist. Sie dienen zum Ausgleich perspektivischer Verzerrungen wie stürzende Linien. Es sind bereits derartige Objektive bekannt, die sich an der Kamera vertikal, horizontal und diagonal verschieben lassen und welche zur Korrektur der Perspektive bei Aufnahmen hauptsächlich in der Architektur- und Industriephotographie verwendet werden.

Aus der US-A-29 31 268 ist eine Vorrichtung bekannt, bei welcher zwei Platten in jeweils einer Schwalbenschwanzführung relativ zur Filmebene mit Spindeln wahlweise in x- oder y-Richtung verschoben werden können. Diese Art der Plattenbewegung benötigt einen hohen Platzbedarf und ist sehr teuer, da viele Teile mit sehr geringen Toleranzen zueinander benötigt werden. Dies trifft in gleicher Weise auf ein Objektiv mit einer Kupplungsvorrichtung aus der DE-PS 28 01 994 zu.

Aus der DE-A-26 13 159 ist ein photographisches Objektiv bekannt, welches die Schwalbenschwanzführung vermeidet.

Bei diesem Objektiv sind zur Bewegung in x-y-Richtung Drehringe zwischen einer Einstellfassung des Objektivs und einem Drehwinkelübertragungssystem vorgesehen, welche übereinandergeschoben montiert sind. Der mittlere Ring ist ortsfest und zentrisch zur Kamera angeordnet und die radiale und axiale Führung wird von zwei weiteren Ringen gebildet, welche bei ihrer Drehung über Steuerkurven und Verbindungsteile die Bewegung auf die Einstellfassung des Objektivs übertragen. Der hohe Platzbedarf und das Problem mit den sehr geringen Toleranzen liefern auch hier keine optimale Lösung. Entsprechendes gilt für den sogenannten Shift-Adapter aus der DE-A-34 36 886, der zwischen Objektiv und Kamera angeordnet ist.

Aus der US-A-37 13 725 ist ein PC-Objektiv bekannt, bei welchem die Verstellung senkrecht zur optischen Achse durch zwei ineinandergesteckte exzentrische Ringe erfolgt. Der Platzbedarf ist geringer als bei den anderen Lösungen, doch wurde das Toleranzproblem lediglich von vielen linienhaften Flächen auf runde Flächen verlagert, ohne daß eine wesentliche Verringerung der exakt zu bearbeitenden Flächen erfolgt. Außerdem kann man mit diesem PC-Objektiv nur einen relativ kleinen Verstellbereich realisieren.

Der vorliegenden Erfindung liegt die Aufgabe zugrunde, ein Verfahren sowie eine Vorrichtung zur Korrektur von perspektivischen Verzeichnungen durch Verschieben eines abbildenden optischen Systems in einer Ebene senkrecht zu seiner optischen Achse zu schaffen, welche mit einer minimalen Anzahl exakt zu bearbeitender Flächen bei möglichst großen Fertigungstoleranzen auskommt.

Diese Aufgabe wird erfindungsgemäß durch ein Verfahren bzw. durch eine Vorrichtung nach den Ansprüchen 1 bzw. 2 gelöst.

Unter einem Bildträger gemäß der Erfindung sind photographische Schichten, lichtempfindliche Linien- oder Flächensensoren usw. zu verstehen.

Durch die bei der Vorrichtung nach der Erfindung vorgesehene Lage des Schwenkpunktes außerhalb der Strahlendurchtrittsöffnung des Gerätes bzw. des abbildenden optischen Systems können die Toleranzen bei der Schwenkbewegung des Systems relativ groß gehalten werden.

Bei einem bevorzugten und besonders vorteilhaften Ausführungsbeispiel nach Anspruch 3, treten die zu beachtenden Toleranzen lediglich zwischen zwei planen Flächen senkrecht zu den optischen Achsen auf.

An diesen planen Flächen erfolgt eine Schwenkbewegung, durch welche die optische Achse des abbildenden Systems relativ zur optischen Achse des Gerätes, beispielsweise einer Kamera verschoben wird. Durch diese minimale Anzahl exakt zu bearbeitender Flächen ist der benötigte Platzbedarf gering und es ist eine einfache Montage möglich. Dies alles führt zu geringen Herstellkosten, obwohl trotz kompakter Bauweise eine sehr große Verschiebung (in dieser Schrift auch als Hub bezeichnet) realisiert werden kann.

Damit vorhandene Kameragehäuse und Objektive weiterhin benutzt werden können, wird die Vorrichtung nach der Erfindung vorteilhafterweise als Adapter ausgestaltet. Durch Einsetzen mindestens einer Linse in den Adapter kann man den Einfluß durch die vergrößerte Entfernung zwischen Objektiv und Bildebene im Gerät kompensieren und/oder eine notwendige Vergrößerung des Bildwinkels realisieren. Man kann aber auch in einen Adapter das gesamte Objektiv integrieren.

Um eine exakte Relativverschiebung der optischen Achsen von Objektiv und Kamera zu gewährleisten, ist es vorteilhaft auf der dem Schwenkpunkt gegenüberliegenden Seite eine lösbare Feststellvorrichtung mit Skala vorzusehen, wobei die Feststellvorrichtung zweckmäßig als eine kombinierte Ein- und Feststellschraube ausgeführt ist.

Die Erfindung wird nachstehend in beispielhafter Weise anhand der Figuren 1-4 der Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigt
- Figur 1: eine Seitenansicht eines an eine Kamera angesetzten Shift-Adapters;
- Figur 2: die Vorrichtung nach Figur 1 in Frontansicht;
- Figur 3: eine schematische Darstellung der Bewegung eines Shift-Adapters, und
- Figur 4: eine Detaildarstellung zur Erläuterung des Einflusses der Schwenkbewegung des Shift-Adapters.

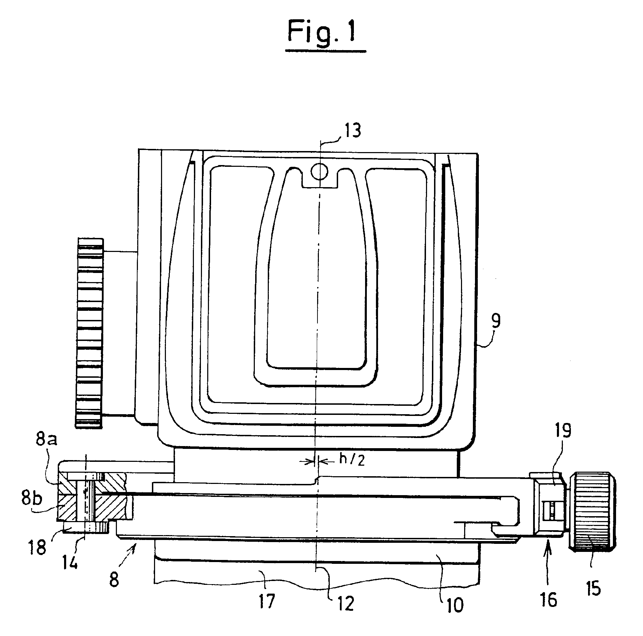

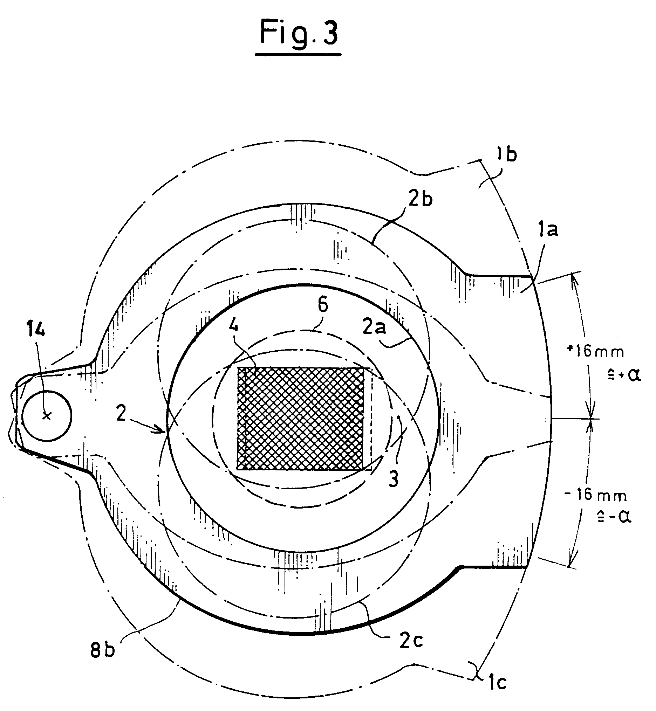

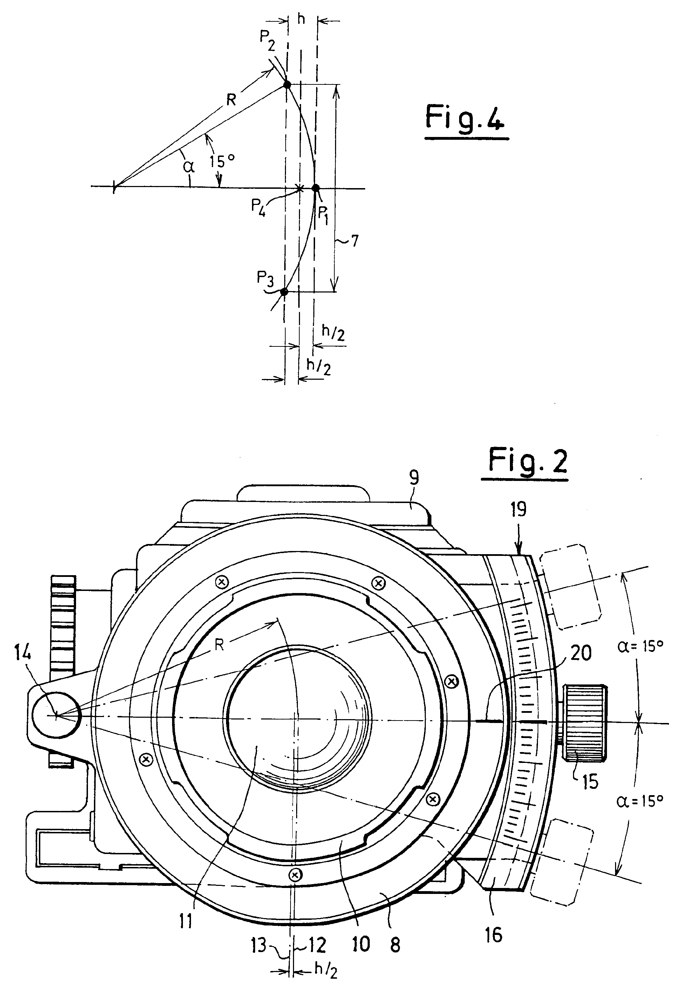

In den Figuren 1 und 2 ist mit (9) ein Kamera-Gehäuse bezeichnet, an dem ein Shift-Adapter (8) lösbar mit einer Feststellvorrichtung z.B. einem Verschluß angebracht ist. Bei dem Kamera-Gehäuse (9) handelt es sich um ein konventionelles Gehäuse, an welchem normalerweise ein Objektiv lösbar befestigt wird. Auf der dem Kamera-Gehäuse (9) gegenüberliegenden Seite des Shift-Adapters (8) hat dieser eine weitere Feststellvorrichtung (10), z.B. einen Bajonett-Anschluß, an welcher ein Weitwinkel-Objektiv (17) befestigt ist.

Damit Weitwinkel-Objektive (17) an dem Shift-Adapter (8) verwendet werden können, muß sichergestellt werden, daß der Bildkreisdurchmesser in der Filmebene im Kamera-Gehäuse (9) genügend groß ist. Dies wird im Zusammenhang mit der Figur 3 näher erläutert werden. Damit das Objektiv (17) in jeder Stellung des Shift-Adapters (8) das Bildformat im Kamera-Gehäuse (9) in seinem Bildkreis einschließt, ist in der Strahlendurchtrittsöffnung des Shift-Adapters (8) eine Linse (11) angeordnet, die den Bildkreisdurchmesser des Objektivs (17) im erforderlichen Maße vergrößert.

Konstruktiv besteht der Shift-Adapter (8) im wesentlichen aus zwei plattenförmigen Körpern (8a,8b). Einer dieser Körper (8a) ist starr, aber lösbar mit dem Kamera-Gehäuse (9) verbunden, in dem anderen Körper (8b) ist das Objektiv (17) eingesetzt. Die beiden plattenförmigen Körper (8a,b) haben eine feste, drehbare Verbindung in einem Punkt (14) durch einen lösbaren, selbstsichernden Bolzen (18). Der Befestigungspunkt (14) liegt seitlich der beiden plattenförmigen Körper (8a,b) und erlaubt, daß diese Körper relativ zueinander um diesen Punkt (14) bewegt werden können. Die Lage des Schwenkpunktes (14) am seitlichen Rand der beiden Körper (8a,b) ist wesentlich für die Funktionsweise des Shift-Adapters (8). Nur dadurch, daß dieser Punkt (14) eine extreme seitliche Lage hat, kann ein noch akzeptabler Mittenversatz bei einem sehr großen Hub erreicht werden. Die seitliche Lage des Schwenkpunkts (14) wirkt sich günstig auf die Fertigungstoleranzen aus, da diese bei einer Führung mit großem Abstand zur optischen Achse (12) relativ groß sein dürfen.

Die beschriebene konstruktive Ausbildung erlaubt die Realisierung des Adapters (8) mit einer minimalen Anzahl von Teilen, woraus ein niedriger Platzbedarf resultiert.

Auf der dem Schwenkpunkt (14) gegenüberliegenden Seite greift einer der Körper (8a), hier der am Kamera-Gehäuse (9) befestigte, um den anderen plattenförmigen Körper (8b) und sorgt so für eine Führung dieses Körpers (8b), an welchem das Objektiv (17) befestigt ist. Diese zusätzliche Führung erhöht die Stabilität des Adapters (8) und sorgt für eine kräftemäßige Entlastung des Bolzens (18), insbesondere gegen durch Stöße verursachte Kräfte. Aus diesem Grund ist die Führung so ausgelegt, daß sich der vordere plattenförmige Körper (8b) leichtgängig mit nur geringem Spiel in der Führung bewegen kann.

Damit sich das Objektiv (17) nicht von selbst relativ zum Kamera-Gehäuse (9) verstellen kann, ist auf der dem Schwenkpunkt (14) gegenüberliegenden Seite eine lösbare Feststellvorrichtung (15) angebracht. Diese Feststellvorrichtung (15) ist fest mit dem vorderen plattenförmigen Körper (8b) verbunden und greift durch eine seitliche Öffnung der Führung (19). Diese seitliche Öffnung ist an den Enden der Führung (19) geschlossen und sorgt so für eine Begrenzung der Verstellmöglichkeit der beiden plattenförmigen Körper (8a,b).

Die Feststellvorrichtung (15) ist so konstruiert, daß die Feststellung durch ein leichtes Herausziehen der Feststellschraube gelöst werden kann. In diesem Zustand können die beiden plattenförmigen Körper (8a,b) leicht gegeneinander verschwenkt werden. Dabei dient der Teil der Feststellvorrichtung (15), welcher fest mit dem vorderen plattenförmigen Körper (8b) verbunden ist, als Verstellhebel. Wird die Feststellvorrichtung (15) losgelassen, so sorgt sie für eine Fixierung der beiden plattenförmigen Körper (8a,b) zueinander. Damit ist die Feststellvorrichtung (15) im gezogenen Zustand gleichzeitig eine Einstellvorrichtung für die Lage der beiden Körper (8a,b) zueinander. Damit die Stellung der beiden plattenfömigen Körper (8a,b) zueinander abgelesen werden kann um diese Stellung für die gemachten Aufnahmen zu dokumentieren, ist auf der Führung (19) eine Skala (16) angebracht. Korrespondierend zu dieser Skala (16) mit einer Stricheinteilung zum Ablesen des eingestellten Hubs ist auf dem vorderen plattenförmigen Körper (8b) ein Indexstrich (20) angebracht.

Die optische Achse (12) des Adapters (8) und damit des Objektivs (17) ist gegenüber der optischen Achse (13) des Kamera-Gehäuses (9) leicht versetzt. Diese Versetzung entspricht dem halben Mittenversatz (h/2), wie anhand der Figuren 3 und 4 näher erläutert wird. In der schematischen Darstellung der Figur 3 ist der das Objektiv (17) tragende Körper (8b) des Shift-Adapters (8) in drei verschiedenen Stellungen (1a-c) gezeigt. Seine, zur Aufnahme des Objektivs (17) dienende kreisförmige Öffnung (2) überdeckt sich in den mit (1a-1c) bezeichneten Schwenkpositionen in einem Bereich (3). In diesem Bereich (3) liegt das Bildformat (4) im Kamera-Gehäuse (9).

Die notwendige Größe der Öffnung (2) ergibt sich als eine Funktion der Größe des Bildformats (4), des Abstandes des Mittelpunktes dieser Öffnung vom Schwenkpunkt (14), und der Größe des Schwenkwinkels α bei gegebenen optischen Eigenschaften eines Objektivs (17). Der Schwenkpunkt (14) liegt möglichst weit entfernt vom Mittelpunkt der Öffnung (2). Damit bei jeder Stellung der Strahlendurchtrittsöffnung (2) eine Belichtung des vollständigen Bildformats (4) möglich ist, darf dessen Fläche niemals aus der Fläche der zentralen Öffnung (2) des Körpers (8b) hinauswandern. Damit ergibt sich bei gegebener Größe des Bildformats (4) der Schwenkwinkel α , der die maximale Auslenkung des Körpers (8b) aus seiner Normallage (1a) in positiver und negativer Richtung angibt. Damit die Fläche des Bildformats (4) immer in der Fläche der zentralen Öffnung (2) liegt, muß deren Durchmesser bei einem Shift-Adapter (8) größer sein als bei einem Normalobjektiv. Der Bildkreisdurchmesser (6) eines Normalobjektivs (17) ist zum Größenvergleich in der Figur 3 eingezeichnet. Zur Vergrößerung des Bildkreisdurchmessers (6) eines Normalobjektivs dient die im Shift-Adapter (8) vorgesehene Linse (11) (siehe Figur 2).

Da der Mittelpunkt der Öffnung (2) sich auf einer Sehne eines Kreises bewegt, dessen Mittelpunkt der Schwenkpunkt (14) darstellt, muß das Bildformat (4) um die halbe Höhe des dabei entstehenden Kreisabschnittes in Richtung Schwenkpunkt (14) versetzt angeordnet werden. Dies soll in Figur 4 nun genauer erläutert werden.

Der Mittelpunkt der Öffnung (2) in Normallage ist mit P1 gekennzeichnet. Wird der Körper (8b) um den maximal möglichen Wert des Schwenkwinkels, hier α = ± 15°, geschwenkt, so ergeben sich in den Maximallagen der Öffnung (2) Stellungen der Mittelpunkte, welche mit P2 und P3 gekennzeichnet sind. Die Mittelpunkte der Öffnung (2) (P1,P2,P3) liegen alle auf Sehnen eines Schwenkkreises, welcher seinen Mittelpunkt im Schwenkpunkt (14) hat. Dieser Schwenkkreis hat einen Kreisdurchmesser R. Durch die Lage der Mittelpunkte (P2,P3) bei maximaler Auslenkung des Körpers (8b) ist die Länge des Kreisbogens und damit die Länge der Kreissehne (7) festgelegt, wobei letztere bei Shift-Objektiven (8) auch als Hub bezeichnet wird. Außerdem wird dadurch die Höhe des Kreisabschnittes festgelegt, welche auch als Mittenversatz h bezeichnet wird. Um einen möglichst geringen Mittenversatz bei jeder Stellung des Shift-Adapters (8) zu erhalten, wird der Mittelpunkt der Öffnung in Grundstellung von P1 nach P4 verlegt. Dadurch erreicht man, daß der Mittenversatz nur noch ± 1/2h sein kann.

In einer anderen Ausgestaltung des Shift-Adapters kann ein Objektiv auch untrennbar mit einem der plattenförmigen Körper (8b) verbunden sein. Bei entsprechender konstruktiver Auslegung des Objektivs (17) kann auch eine separate Linse (11) zur Vergrößerung des Bildkreisdurchmessers entfallen.

Als optische Geräte zur Verwendung mit einem Shift-Adapter kommen beispielhaft in Frage: Filmkameras, Fotoapparate, Projektoren usw.. Dabei können weitere Verstellmöglichkeiten eines Objektivs relativ zum Filmformat (z.B. Vergrößerungen der Entfernungen entlang der optischen Achse, Rotationen um die optische Achse, Kippbewegungen usw.) hinzukommen. Gerade die erfindungsgemäße Vorrichtung erleichtert die Konstruktion derartiger kombinierter Bewegungen wesentlich, da der Shift-Adapter selbst nur aus sehr wenigen Teilen besteht.

## Patentansprüche

1. Verfahren zur parallelen Verschiebung der optischen Achse (12) eines abbildenden optischen Svstems (17) relativ zu der optischen Achse (13) eines mit einer Strahlendurchtrittsöffnung versehenen Geräts (9) zum Zwecke der Korrektur von perspektivischen Verzeichnungen, dadurch gekennzeichnet, daß die parallele Verschiebung in einer Ebene senkrecht zu den optischen Achsen (12, 13) des Gerätes (9) und des abbildenden Systems (17) durch eine Schwenkbewegung des abbildenden optischen Systems (17) relativ zur Strahlendurchtrittsöffnung des Geräts (9) um einen Schwenkpunkt (14) erfolgt, der sich außerhalb der Strahlendurchtrittsöffnung befindet.

2. Vorrichtung zur parallelen Verschiebung der optischen Achse (12) eines abbildenden optischen Systems (17) relativ zu der optischen Achse (13) eines mit einer Strahlendurchtrittsöffnung versehenen Geräts (9) zum Zwecke der Korrektur von perspektivischen Verzeichnungen mit einer ersten Halterung (8b) mit einer Öffnung für das optische System (17) und einer mit der ersten Halterung (8b) verbundenen zweiten Halterung (8a) mit einer Öffnung für das Gerät (9), wobei die erste Halterung (8b) relativ zur zweiten Halterung in einer Ebene senkrecht zu den optischen Achsen (12, 13) des Geräts (9) und des abbildenden Systems (17) verschiebbar ist, dadurch gekennzeichnet, daß die beiden Halterungen (8a, 8b) durch eine schwenkachse (18) miteinander verbunden sind, so daß eine Schwenkbewegung der ersten Halterung (8b) relativ zur zweiten Halterung (8a) um die Schwenkachse (18) erfolgen kann, und daß die Schwenachse (18) außerhalb der Öffnungen der beiden Halterungen (8a, 8b) angebracht ist.

3. Vorrichtung nach Anspruch 2, gekennzeichnet dadurch, daß die Vorrichtung als Adapter (8) ausgebildet ist, der lösbar zwischen dem Gerät (9) und dem abbildenden optischen System (17) anordbar ist, mit einer ersten Anschlußvorrichtung zur Verbindung mit dem Gerät (9) und mit einer zweiten Anschlußvorrichtung (10) auf der der ersten Anschlußvorrichtung gegenüberliegenden Seite zur Verbindung mit dem abbildenden optischen System (17).

4. Vorrichtung nach einem der Ansprüche 2 oder 3, dadurch gekennzeichnet, daß die Öffnungen in den Halterungen (8a, 8b) so gegeneinander Versetzt angeordnet sind, daß bei Verwendung des Vorrichtung die Achse (12) des abbildenden Systems (17) um den halben Mittenversatz (h/2) von der optischen Achse (13) des Gerätes (9) in Richtung von der Schwenkachse (18) weg versetzt ist.

5. Vorrichtung nach einem der Ansprüche 2 - 4, dadurch gekennzeichnet, daß in der Öffnung (2) einer der Halterungen (8a,8b) mindestens eine Linse (11) zur Vergrößerung des Bildfeldwinkels angebracht ist.

6. Vorrichtung nach einem der Ansprüche 2 - 5, dadurch gekennzeichnet, daß die Vorrichtung das als Objektiv ausgebildete abbildende optische System (17) enthält, wobei das abbildende optische System (17) fest mit der ersten Halterung (8b) verbunden ist.

7. Vorrichtung nach einem der Ansprüche 2 - 6, dadurch gekennzeichnet, daß auf der der Schwenkachse (18) gegenüberliegenden Seite eine lösbare Feststellvorrichtung (15) vorgesehen ist.

8. Vorrichtung nach Anspruch 7, dadurch gekennzeichnet, daß die Feststellvorrichtung (15) als eine kombinierte Ein- und Feststellvorrichtung ausgeführt ist.

## Claims

1. Procedure for correcting perspective distortions by parallel shifting the optical axis (12) of an imaging optical system (17) relative to the optical axis (13) of an apparatus (9) having a beam pass - through opening for correcting perspective distortions, characterized in a parallel displacement in a plane transverse to the optical axis (12, 13) of the apparatus (9) and the imaging system (17) by a pivotal displacement of the imaging system (17) relative to the beam pass - through opening of the apparatus (9) around a pivot point (14), which is disposed outside of the beam pass - through opening.

2. A device for correcting perspective distortion by parallel shifting the optical axis (12) of an imaging optical system (17) relative to the optical axis (13) of an apparatus (9) having a beam pass - through opening comprising a first holding device (8b) having an opening for the optical system (17) and a second holding device (8a), connected to the first holding device (8b) and having an opening for the apparatus (9), said first holding device (8b) can be displaced to said second holding device in a plane transverse to the optical axis (12, 13) of the apparatus (9) and the imaging system (17), the device is characterized in a connection of the two holding devices (8a, 8b) with a pivot axis (18), so that a pivotal displacement of the first holding device (8b) relative to the second holding device (8a) is possible around that pivot axis (18), the pivot axis (18) is arranged outside of the opening of the two holding devices (8a, 8b).

3. The device of claim 1, said device is constructed as an adapter (8) which is removable disposed between the apparatus (9) and the imaging optical system (17), said adapter (8) having a first connection to connect it with the apparatus (9) and a second connection (10) to connect it with the imaging optical system (17), whereby the two connections are arranged on the adapter (8) at opposite sides.

4. The device of claim 2 or 3, said openings in said holding devices (8a, 8b) are arranged with an offset in the way that by using the device the axis (12) of the image producing system (17) is displaced from the axis (13) of the apparatus (9) in a direction away from the pivot axis (18) by an amount corresponding to one-half the centre offset (h/2).

5. The device of one of the claims 2-4, in which not less than one lens (11) is arranged in the opening (2) of the holding devices (8a, 8b) for increasing the image field angle.

6. The device according to claim 2-5, the device includes the imaging optical system (17) configured as an objective and the imaging optical system (17) is fixed with the first holding device (8b).

7. The device according to claim 2-6, further comprising releasable fixing means (15) mounted at a location opposite to the pivot axis (18).

8. The device of claim 7, said fixing means (15) is constructed as a combination means for adjusting and fixing.

## Revendications

1. Procédé pour réaliser un déplacement parallèle de l'axe optique (12) d'un système optique de formation d'images (17) par rapport l'axe optique (13) d'n appareil (9) pourvu d'une ouverture de passage du rayonnement, afin de corriger des distorsions de perspective, caractérisé par le fait que le déplacement parallèle s'effectue dans un plan perpendiculaire aux axes optiques (12, 13) de l'appareil (9) et du système de formation d'images (17), moyennant un mouvement de pivotement du système optique de formation d'images (17) par rapport à l'ouverture de passage du rayonnement de l'appareil (9), autour d'un point de pivotement (14), qui est situé à l'extérieur de l'ouverture de passage du rayonnement.

2. Dispositif pour réaliser un déplacement parallèle de l'axe optique (12) d'un système optique de formation d'images (17) par rapport l'axe optique (13) d'un appareil (9) pourvu d'une ouverture de passage du rayonnement, afin de corriger des distorsions de perspective, comportant un premier support (8b) pourvu d'une ouverture pour le système optique (17), et un second support (8a) relié au premier support (8b) et possédant une ouverture pour l'appareil (9), le premier support (8b) étant déplaçable par rapport au second support dans un plan perpendiculaire aux axes optiques (12, 13) de l'appareil (9) et du système de formation d'images (17), caractérisé par le fait que les deux supports (8a, 8b) sont reliés entre eux par un axe de pivotement (18), de sorte qu'un mouvement de pivotement du premier support (8b) peut s'effectuer par rapport au second support (8a) autour de l'axe de pivotement (18), et que l'axe de pivotement (18) est situé à l'extérieur des ouvertures des deux supports (8a, 8b).

3. Dispositif selon la revendication 2, caractérisé en ce que le dispositif est agencé en tant qu'adaptateur (8), qui peut être disposé de façon amovible entre l'appareil (9) et le système optique de formation d'images (17), et comportant un premier dispositif de raccordement pour sa liaison à l'appareil (9) et un second dispositif de raccordement (10) situé sur le côté opposé au premier dispositif de raccordement, pour sa liaison au système optique de formation d'images (17).

4. Dispositif selon l'une des revendications 2 ou 2, caractérisé en ce que les ouvertures situées dans les supports (8a, 8b) sont disposées en étant décalées réciproquement de telle sorte que, lors de l'utilisation du dispositif, l'axe (12) du système de formation d'images (17) est décalé de l'axe optique (13) de l'appareil (9), sur une distance égale à la moitié du décalage central (h/2) en direction de l'axe de pivotement (18).

5. Dispositif selon l'une des revendications 2-4, caractérisé en ce qu'au moins une lentille (11) servant à accroître l'angle du champ d'image est disposée dans l'ouverture (2) de l'un des supports (8a, 8b).

6. Dispositif selon l'une des revendications 2-5, caractérisé en ce que le dispositif contient le système optique de formation d'images (17) réalisé sous la forme d'un objectif, ce système optique de formation d'images (17) étant raccordé de façon fixe au premier support (8b).

7. Dispositif selon l'une des revendications 2-6, caractérisé en ce qu'un dispositif de fixation amovible (15) est prévu sur le côté tourné à l'opposé de l'axe de pivotement (18).

8. Dispositif selon la revendication 7, caractérisé en ce que le dispositif de fixation (15) est réalisé sous la forme d'un dispositif combiné de réglage et de fixation.
